# EUROPEAN PATENT APPLICATION

(11) **EP 4 156 372 A1**
(43) Date of publication of application: **29.03.2023**
(21) Application number: 21199478.5
(22) Date of filing: 28.09.2021
(51) Int. Cl.: H01M 10/42, H01M 50/209, H01M 50/249, H01M 50/284

(54) **A BATTERY MODULE, A BATTERY PACK, AN ELECTRIC VEHICLE, A BATTERY MANAGEMENT ARRANGEMENT, AND A METHOD FOR ASSEMBLING A BATTERY MODULE**

(71) Applicant: Samsung SDI Co., Ltd., Yongin-si, Gyeonggi-do 17084 (KR)
(72) Inventor: Ridisser, Markus, 8141 Premstätten (AT); Hadler, Bernhard, 8073 Feldkirchen/Graz (AT)
(74) Representative: Gulde & Partner

(57) **Abstract**

The present disclosure refers to a battery module (12), comprising: a housing (13) comprising a removable housing section (14), a plurality of battery cells (20) accommodated within the housing (13), and a battery management arrangement (21); wherein the battery management arrangement (21) comprises a battery management module, BMM (22), a battery management housing (23) provided within the housing (13) of the battery module (12) and provided between at least two of the plurality of battery cells (20), an electronics arrangement (27), and a bracket (24) arranged within the battery management housing (23) and adapted to retain the BMM (22).

## Description

### Field of the Disclosure

The present disclosure relates to a battery module for an electric vehicle. The present disclosure also relates to a battery pack comprising the battery module, an electric vehicle comprising the battery pack, a battery management arrangement for a battery module, and to a method for assembling a battery module.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator or a hydrogen fuel power cell. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series *(XpYs)* or multiple cells connected in series that are connected in parallel *(XsYp).*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

A battery system further includes a battery management system (BMS), which is any electronic system that manages the rechargeable battery, battery module and battery pack, such as by protecting the batteries from operating outside their safe operating area, monitoring their states, calculating secondary data, reporting that data, controlling its environment, authenticating it and/or balancing it. For example, the BMS may monitor the state of the battery as represented by voltage (such as total voltage of the battery pack or battery modules, voltages of individual cells), temperature (such as average temperature of the battery pack or battery modules, coolant intake temperature, coolant output temperature, or temperatures of individual cells), coolant flow (such as flow rate, cooling liquid pressure), and current. Additionally, a BMS may calculate values based on the above items, such as minimum and maximum cell voltage, state of charge (SOC) or depth of discharge (DOD) to indicate the charge level of the battery, state of health (SOH; a variously-defined measurement of the remaining capacity of the battery as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. The BMS may be also distributed, wherein a BMS board is installed at each cell, with just a single communication cable between the battery and a controller. Or the BMS may be of modular construction including a few controllers, each handling a certain number of cells, with communication between the controllers. Centralized BMSs are most economical, least expandable, and are plagued by a multitude of wires. Distributed BMSs are the most expensive, simplest to install, and offer the cleanest assembly. Modular BMSs offer a compromise of the features and problems of the other two topologies.

A BMS may protect the battery pack from operating outside its safe operating area. Operation outside the safe operating area may be indicated in case of over-current, over-voltage (during charging), over-temperature, under-temperature, over-pressure, and ground fault or leakage current detection. The BMS may prevent operation outside the battery's safe operating area by including an internal switch (such as a relay or solid-state device) which is opened if the battery is operated outside its safe operating area, requesting the devices to which the battery is connected to reduce or even terminate using the battery, and actively controlling the environment, such as through heaters, fans, air conditioning or liquid cooling.

The mechanical integration of such a battery system requires appropriate mechanical connections between the individual components, e.g. between battery cells, the BMS, and the housing. These connections must remain functional and save during the average service life of the battery system. Further, installation space and interchangeability requirements must be met, especially in mobile applications.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge, SoC, potential electrical performance, charging ability and internal resistance as well as actual or predicted power demands or surpluses of the consumers. Therefore, battery systems usually comprise a battery management system, BMS, for obtaining and processing such information on system level and further a plurality of battery module managers, BMMs, which are part of the system's battery modules and obtain and process relevant information on module level. Particularly, the BMS usually measures the system voltage, the system current, the local temperature at different places inside the system housing, and the insulation resistance between live components and the system housing. Additionally, the BMMs usually measure the individual cell voltages and temperatures of the battery cells in a battery module.

Thus, the BMS/BMU is provided for managing the battery pack, such as by protecting the battery from operating outside its safe operating area, monitoring its state, calculating secondary data, reporting that data, controlling its environment, authenticating it and/or balancing it.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. These exothermic reactions include combustion of flammable gas compositions within the battery pack housing. For example, when a cell is heated above a critical temperature (typically above 150°C) it can transit into a thermal runaway. The initial heating may be caused by a local failure, such as a cell internal short circuit, heating from a defect electrical contact, short circuit to a neighboring cell. During the thermal runaway, a failed battery cell, i.e., a battery cell which has a local failure, may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack.

According to prior art, the BMS is and/or more than one BMS are difficult to access in case of failure or service. A repair of electronic components of electric batteries is mostly linked to a disassembly of the battery. The BMSs are consuming viable package space mostly on top of battery stacks where they consume significant space in a direction along an elongation of the battery cells. BMSs cannot be placed onto the side of prismatic cells without being potentially damage caused by swelling forces. Usually packaged close to the battery cells, BMSs are also exposed to high temperature in case of a thermal event and therefore the function can be compromised.

DE 10 2017 011 717 A1 discloses an electrical energy storage for a vehicle with a housing in which a number of individual cells connected in series and/or in parallel are arranged, wherein a cell monitoring unit is arranged in a further housing which is positioned between individual cells in the housing and forms a force absorption element. The disclosed energy storage provides mechanical stability by integrating the cell monitoring unit into the cell block, since the cell monitoring unit can be handled like an individual cell during assembly. If, e.g., the cell monitoring unit with its further housing is arranged centrally with respect to the cell block, the cell monitoring unit can be regarded as a so-called module divider. Thus, in the event of damage and/or replacement, half, i.e., either the individual cells arranged to the left or to the right of the cell monitoring unit must be removed. Thus, to remove the cell monitoring unit, e.g., for maintenance and/or service, typically a plurality of individual cells needs to be removed.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery module is provided, comprising: a housing comprising a removable housing section, a plurality of battery cells accommodated within the housing, and a battery management arrangement; wherein the battery management arrangement comprises a battery management module, BMM, a battery management housing provided within the housing of the battery module and provided between at least two of the plurality of battery cells, an electronics arrangement, and a bracket arranged within the battery management housing and adapted to retain the BMM. According to another aspect of the present disclosure, a battery pack is provided, comprising a plurality of battery modules as described above.

Yet another aspect of the present disclosure refers to an electric vehicle comprising at least one battery module as described above and/or at least one battery pack as described above.

Yet another aspect of the present disclosure refers to a battery management arrangement comprising a battery management module, BMM, a battery management housing, an electronics arrangement, and a bracket arranged within the battery management housing and adapted to retain the BMM.

Yet another aspect of the present disclosure refers to a method for assembling a battery module as described above, wherein the method comprises the steps of: a) providing a housing comprising a removable housing section; a plurality of battery cells accommodated within the housing; and a battery management arrangement comprising a battery management module, BMM, a battery management housing, an electronics arrangement, and a bracket; b) arranging the battery management housing within the housing of the battery module between at least two of the plurality of battery cells; and c) arranging the BMM in the bracket arranged within the battery management housing and adapted to retain the BMM.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic view of an electric vehicle according to an embodiment.
- Fig. 2: illustrates a schematic sectional view of a battery module according to an embodiment.
- Fig. 3: illustrates an exploded view of a battery management arrangement according to an embodiment.
- Fig. 4: illustrates a sectional side view of a battery management arrangement according to an embodiment.
- Fig. 5: illustrates a perspective view of an opened encasing comprising a battery management module according to an embodiment.
- Fig. 6: illustrates a perspective view of a closed encasing comprising a battery management module according to an embodiment.
- Fig. 7: illustrates a perspective view of battery management arrangement according to an embodiment.
- Fig. 8: illustrates a perspective view of battery management arrangement in the mounted state according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

### General Concept

According to one aspect of the present disclosure, a battery module is provided. The battery module comprises a housing with a removable housing section, a plurality of battery cells accommodated within the housing, and a battery management arrangement. The battery management arrangement is arranged within the housing.

The battery management arrangement comprises a battery management module, BMM, a battery management housing provided within the housing of the battery module and provided between at least two of the plurality of battery cells, and an electronics arrangement. By providing the battery management housing within the housing of the battery module, the battery management arrangement is arranged within the housing of the battery module. The plurality of battery cells forms a stack. By providing the battery management housing between at least two battery cells, the battery management arrangement is arranged in the stack. Optionally, each of the plurality of battery cells as a similar shape and the battery management housing has also a shape that is similar to the shape of battery cells so that stacking is facilitated. The battery management housing provides a thermal resistant housing in which the BMM is placed and which protects the BMM from thermal damage in case of a thermal event and which prolongs or even stop a possible thermal runaway. The battery management housing provides a mechanically robust housing to encase the BMM that sustains forces due to swelling and/or pressing. The electronics arrangement enables the battery management arrangement to collect battery cell sensing lines to electrically connected in particular to the battery cells of the battery module.

The battery management arrangement further comprises a bracket arranged within the battery management housing and adapted to retain the BMM. The bracket increases the thermal resistance of the battery management arrangement further to protect the BMM from thermal damage. Due to a sufficient mechanical strength of the battery management housing and/or of the bracket the BMM can be placed in a swelling direction of the battery cells which enables new options for stacking and packaging to assemble the battery module. The battery management arrangement can sustain forces caused by swelling and/or pressing due to stacking. The battery management arrangement is arranged within the housing of the battery module so that the BMM can be removed when the removable housing section is removed. This can facilitate servicing the battery module. The BMM is changeable by only removing the removable housing section and therefore a disassembly of the battery from the car is not necessary for, e.g., service purposes. Instead, the BMM can be removed and serviced. Thus, the battery management arrangement becomes a multifunctional super spacer for thermal and electrical insulation with an integrated BMM.

According to one embodiment, the battery management arrangement further comprises an encasing removably arranged within the bracket and adapted to retain the BMM. This embodiment facilitates further the possibility of an efficient disassembly and assembly of the battery management arrangement. Therein, the thermal resistance and mechanical strength of the battery management housing and/or the bracket are unaffected by a disassembly or an assembly of the battery management system, since the encasing can be removed. Optionally, the encasing is an insulating plastic encasing to provide an encasing that is lightweight, cost-effective to manufacture and electrically insulating to protect the retained BMM.

According to one embodiment, the encasing comprises at least two encasing sections between which the BMM is arranged and/or the encasing comprises at least one encasing fastener and/or encasing clip arrangement to removably fasten the encasing to the bracket. The at least two encasing sections form an at least two-part encasing in which the BMM is arranged. Optionally, the encasing can be opened and closed in an optionally reversible manner to enable an effective assembly and optionally so that the BMM can be easily removed. E.g., the encasing can comprise a clip arrangement that enables opening the encasing by separating the encasing sections and/or closing the encasing by engaging the encasing sections with each other. If the encasing comprises two encasing sections, the encasing is called bipartite. The at least one encasing fastener can provide a screw arrangement, e.g., an encasing through hole comprised by the encasing, a bracket hole comprised by the bracket and a screw are provided so that the encasing can be screwed to the bracket to enable an effective assembly and so that the encasing can be easily removed. Alternatively or additionally, the at least one encasing fastener can comprise an encasing clip arrangement so that the encasing can be clipped to the bracket.

According to one embodiment, the electronics arrangement is mounted to the bracket to provide a mechanical and electrical separation from the electronics arrangement and the battery management housing. The arrangement of the electronics arrangement on the bracket facilitates an electrical connection between the electronics arrangement and the battery cells of the battery module and/or between the electronics arrangement and an electronics arrangement of a different battery module.

According to one embodiment, the battery management housing is made of metal and the bracket is made of a polymer. This embodiment provides a battery management housing with a large mechanical strength and a bracket that is electrically isolating and lightweight.

According to one embodiment, the battery management housing is made of sheet metal with a thickness of between 1.8 mm and 2.2 mm, optionally 2 mm. The thickness provides a balance between requirements for mechanical strength and weight.

According to one embodiment, the battery management housing defines an axis along which the bracket is slidably insertable in the battery management housing to enable and efficient and simple method of manufacturing the battery management arrangement.

According to one embodiment, the bracket defines an axis along which the BMM is slidably insertable in the bracket to be retained to enable and efficient and simple method of assembling and/or disassembling the bracket and the BMM.

According to one embodiment, the axis is perpendicular to a longitudinal direction of the removable housing section to enable that the bracket and/or the BMM can be removed efficiently if the removable housing section is removed.

According to one embodiment, the bracket comprises an opening to retain the BMM. The BMM can be inserted into the opening. Optionally, the BMM can be inserted into the opening by inserting the encasing together with the BMM into the opening. Therein, the opening is adapted to retain the encasing.

According to one embodiment, the bracket comprises at least one connector casing; and the BMM comprises a connector provided within the connector casing to interconnect the BMM and the electronics arrangement. In this embodiment, the connector casing, i.e., the plug housing for a plug for the interconnection between the BMM and the electronics arrangement, is already provided by the bracket. Thus, a separate connector casing can thereby be dismissed which provides a cost-efficient embodiment. The connector is comprised by the BMM and encased in the connector casing.

According to another aspect of the present disclosure, a battery pack is provided, comprising a plurality of battery modules as described above. In other words, the battery pack comprises a plurality of battery modules with the battery management arrangement as described above, wherein the battery modules and/or the battery management arrangements are interconnected with each other, and wherein the plurality of battery management arrangements that are interconnected with each other are part of, or forming the battery management system.

Yet another aspect of the present disclosure refers to an electric vehicle comprising at least one battery module as described above and/or at least one battery pack as described above. In other words, the electric vehicle also comprises at least one of the battery management arrangements as described above. Therein, the battery module and/or the battery pack can be serviced without being removed from the electric vehicle by removing the removable housing section and removing the BMM from the battery management arrangement.

Yet another aspect of the present disclosure refers to a battery management arrangement comprising a battery management module, BMM, a battery management housing, and an electronics arrangement; wherein the battery management arrangement further comprises a bracket arranged within the battery management housing and adapted to retain the BMM. In other words, this aspect relates to the battery management arrangement with its battery management housing, i.e., with the so-called super spacer, and provides a battery management arrangement that can be efficiently serviced even when being mounted in a battery module, in a battery module being mounted in the battery pack, and/or in a battery module mounted to an electric vehicle. The battery management arrangement can comprise optional features as describe above with reference to the battery module.

Yet another aspect of the present disclosure refers to a method for assembling a battery module as described above, wherein the method comprises the steps of: a) providing a housing comprising a removable housing section; a plurality of battery cells accommodated within the housing; and a battery management arrangement comprising a battery management module, BMM, a battery management housing, an electronics arrangement, and a bracket; b) arranging the battery management housing within the housing of the battery module between at least two of the plurality of battery cells; and c) arranging the BMM in the bracket arranged within the battery management housing and adapted to retain the BMM. In other words, this aspect relates to an efficient method of assembly for a battery module that is particularly efficient due to the efficient arrangement of the BMM within the battery management housing, wherein the battery management housing can efficiently be arranged, e.g., stacked, with the battery cells. At least steps b) and c) of the method are interchangeable.

### Specific Embodiments

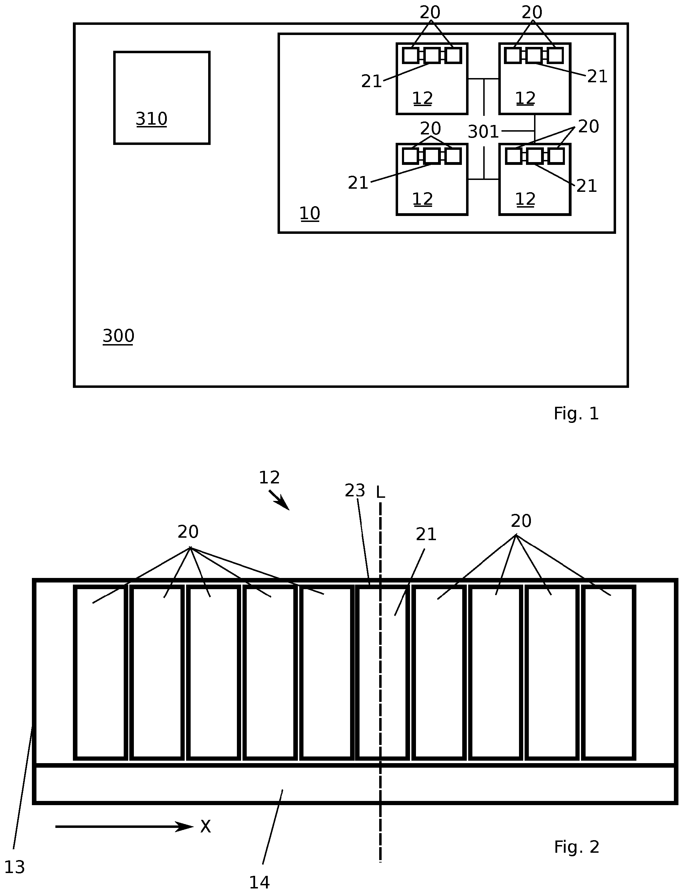

Fig. 1 illustrates a schematic view of an electric vehicle 300. The electric vehicle 300 is propelled by an electric motor 310, using energy stored in rechargeable batteries arranged in a battery pack 10. The battery pack 10 is a set of any number of battery modules 12. Rechargeable batteries are used as a battery module 12 formed of a plurality of secondary battery cells 20. Components of the battery pack 10 include the individual battery modules 12, and interconnects 301, which provide electrical conductivity between battery modules 12.

Each of the battery modules 12 comprises a battery management arrangement 21 provided between two battery cells 20. In this schematic illustration, each battery module 12 comprises two battery cells 20 therebetween which the battery management 21 is provided. However, each of the battery modules 12 can comprise any number of battery cells 20, e.g., as illustrated in Fig. 2 and described with reference thereto. The battery management arrangement 21 is further described with reference to the subsequent Figs. 2 to 4 and provides the possibility of an efficient servicing of any of the battery management arrangements 21 without removing the battery pack 10 and/or one of the battery modules 12 from the vehicle 300.

Fig. 2 illustrates a schematic sectional view of a battery module 12 according to an embodiment.

The battery module 12 comprises a plurality of battery cells 20. The battery cells 20 are arranged in a stacked manner within a housing 13 of the battery module 12. Each of the plurality of battery cells 20 has a similar and/or equal shape. Each of the plurality of battery cells 20 has a plane elongated surface parallel to an axis L. Each of the battery cells 20 has a prismatic shape, which is in this schematic sectional view represented by a rectangle that represents a cross-section of the respective battery cells 20. The stacked arrangement of the battery cells 20 means that the battery cells 20 are arranged so that the plane elongated surfaces of the battery cells 20 are parallel to each other and the battery cells 20 are aligned with each other. I.e., battery cells 20 are assembled perpendicular to the axis L and in a straight line in the battery module 12.

The housing 13 of the battery module 12 comprises a removable housing section 14, which is also referred to as a bottom plate. Thus, the removable housing section 14 is arranged perpendicular to the elongated surfaces of the battery cells 20 and to the axis L. In the embodiment, a longitudinal direction X of the removable housing section 14 is perpendicular to the axis L.

The battery module 12 comprises a battery management arrangement 21 arranged within the housing 13. The battery management arrangement 21 comprises a battery management housing 23 provided between the battery cells 20. The battery management housing 23 has a shape that is similar or equal to the shape of the battery cells 20. The battery management housing 23 has a plane elongated surface parallel to the axis L. The battery management housing 23 has a prismatic shape that matches the prismatic shape of the battery cells 20 and that is in this schematic sectional view represented by a rectangle that represents a cross-section of the battery management housing 23. The battery management arrangement 21 is arranged in a stacked manner within the housing 13. The stacked arrangement of the battery management arrangement 21 means that the battery management housing 23 is arranged so that the plane elongated surface of the battery management arrangement 23 is parallel to and aligned with the battery cells 20. Thus, the removable housing section 14 is arranged perpendicular to the elongated surfaces of the battery management housing 23 and to the axis L.

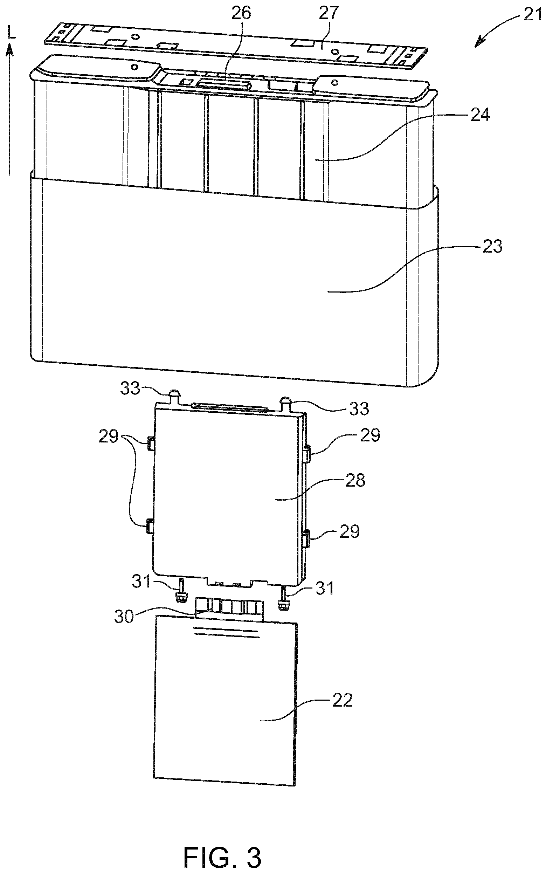

Fig. 3 illustrates an exploded view of the battery management arrangement 21 as shown schematically in Fig. 2.

The battery management housing 23 comprises a prismatic shape that matches the shape of battery cells 20 and that allows a stacked arrangement with the battery cells 20 as described with reference to Fig. 2. The battery management housing 23 is a structural steel encasing, i.e., a housing of the battery management arrangement 21 that is structurally and/or geometrically adapted to enable that the battery management arrangement 21 can be stacked into the battery module 12 as one of the battery cells 20. The battery management housing 23 is made of metal. The battery management housing 23 is made of sheet metal with a thickness of 2 mm.

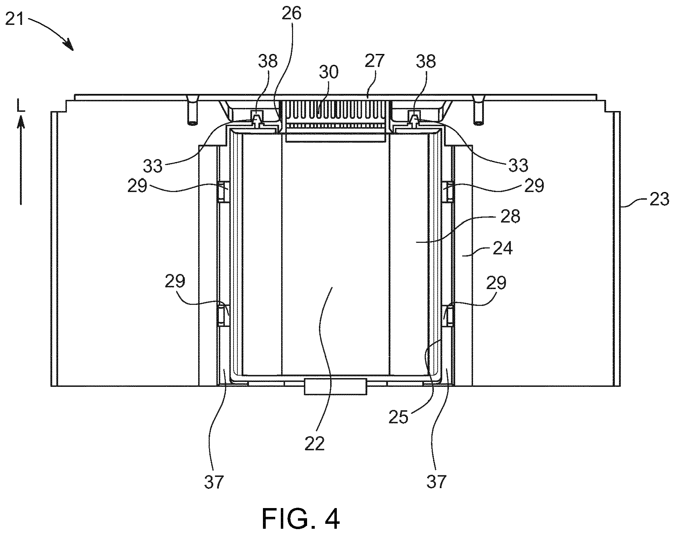

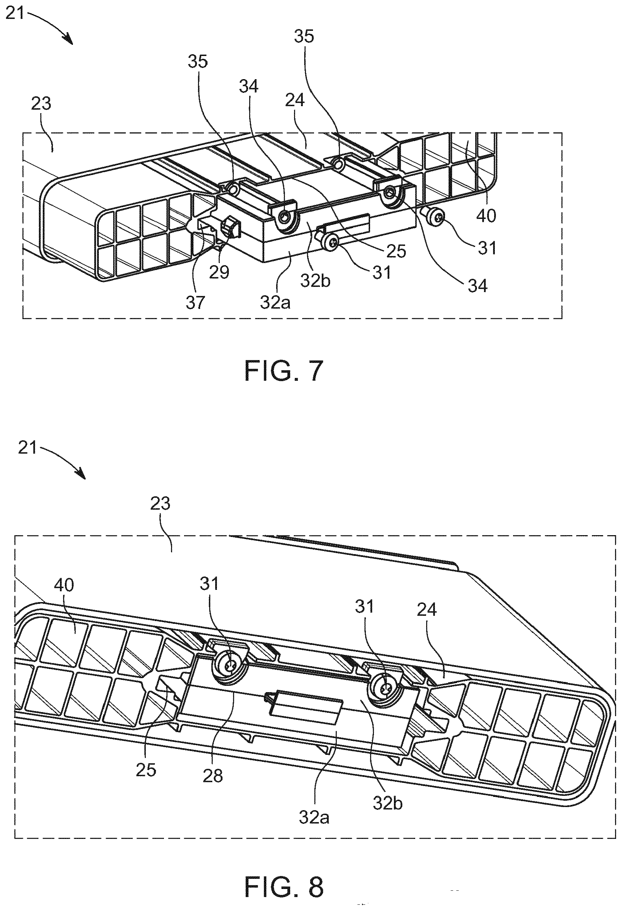

The battery management arrangement 21 comprises a bracket 24 arranged within the battery management housing 23 and adapted to retain a battery management module, BMM 22. The bracket 24 is assembled into the battery management housing 23, i.e., the structural steel encasing. The bracket 24 is made of a polymer, e.g., the bracket 24 is a plastic bracket. The bracket 24 comprises an opening 25 to retain the BMM 22 (see Figs. 7 and 8 and sectional side view in Fig. 4, and the description thereof). The bracket 24 defines an axis L along which the BMM 22 is slidably insertable in the bracket 24 to be retained (see Figs. 7 and 8 and the description thereof below).

The battery management housing 23 also defines an axis L along which the bracket 24 is slidably insertable in the battery management housing 23. The axis L is perpendicular to the longitudinal direction X of the removable housing section 14 of the battery module 12.

The axis L as described with reference to Fig. 2, and the axes L defined by the battery management housing 23 and by the bracket 24 coincide.

The battery management arrangement 21 comprises the BMM 22.

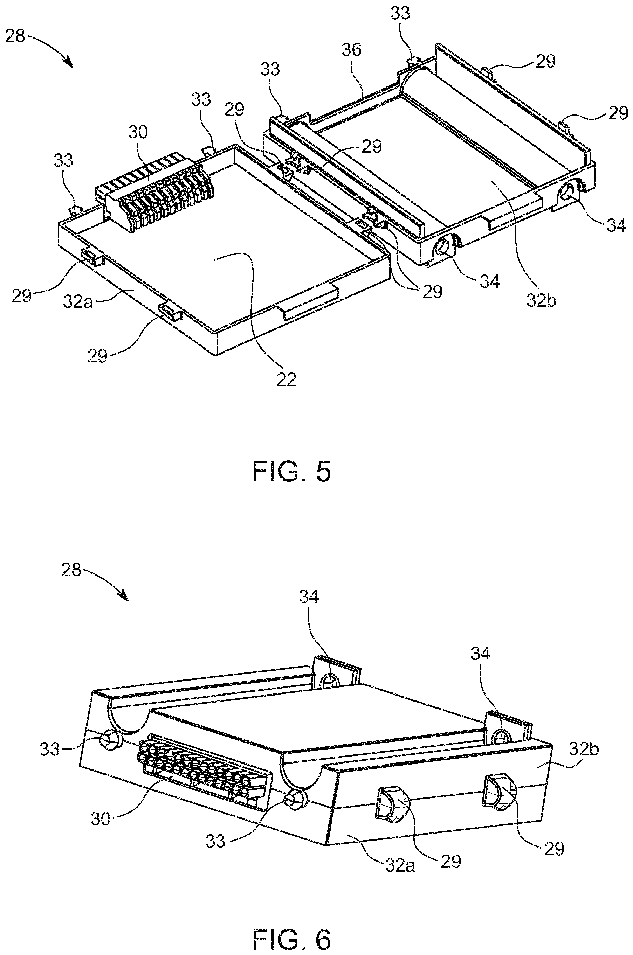

To arrange and retain the BMM 22 within the battery arrangement housing 23, the battery management arrangement 21 comprises an encasing 28 removably arranged within the bracket 24 as shown in Figs. 7 and 8 and described with reference thereto and adapted to retain the BMM 22 as shown in Figs. 5 und 6 and described with reference thereto. The encasing 28 comprises a plurality of encasing fasteners 31 and a plurality of encasing clip arrangements 33 to removably fasten the encasing 28 within the bracket 24. The encasing 28 comprises a plurality of guide members 29 arranged to guide the encasing 28 during insertion into the bracket 24 (see also Figs. 7 and 8 and the description thereof). The BMM 22 is fixed within the insulating plastic encasing 28 which is further described with reference to Figs. 5 and 6 below.

The battery management arrangement 21 comprises an electronics arrangement 27 mounted to the bracket 24. The electronics arrangement 27 is a printed circuit board collector plate screwed onto the bracket 24 and adapted to electrically interconnect the battery cells 20 with the BMM 22 and/or adapted to electrically interconnect the BMM 22 with a BMM of another battery module 12 of the battery pack 10.

The bracket 24 comprises at least one connector casing 26. The connector casing 26 is integrally formed, e.g., molded, with the bracket 24. The BMM 22 comprises a connector 30 provided within the connector casing 26 to interconnect the BMM 22 and the electronics arrangement 27.

The battery module 12 is assembled by providing the housing 13 comprising the removable housing section 14, the plurality of battery cells 20 accommodated within the housing 13, and a battery management arrangement 21 comprising the BMM 22, the battery management housing 23 and the electronics arrangement 27. The battery management housing 23 is arranged within the housing 13 of the battery module 12 between at least two of the plurality of battery cells 20 during stacking. The BMM 22 is arranged with the encasing 28 in the bracket 24 which is arranged within the battery management housing 23.

The complete super spacer assembly, i.e., the battery management arrangement 21 is installed between the battery cells 20 during cell stacking. To electrically connect the battery cells 20 and the BMM 22, wiring can comprise a flat flex cable, FFC, welded on top of the electronics arrangement 27 and/or the connector 30. Cell voltage, NTC signals and daisy chain signals are connected to the BMM 22 via the connector 30, which is so-called BMM quick connector provided in the connector casing 26. The electronics arrangement 27 can be called an adapter plate. The main connection between each super spacer of the battery modules 12, i.e., each of the battery management arrangements 21, is done with a welded FFC.

Fig. 4 illustrates a sectional side view of the battery management arrangement 21 as shown in Figs. 2 and 3.

Fig. 4 shows the battery management arrangement 21 in the mounted state. The bracket 24 is arranged within the battery management housing 23. The bracket 24 comprises an opening 25 in which the encasing 28 encasing the BMM 22 is arranged.

The encasing 28 comprises the plurality of guide members 29 and an encasing clip arrangement 33 to fasten the encasing 28 within the bracket 24. The bracket 24 comprises a complementary guide and/or fastening arrangement. I.e., the encasing 28 comprises a plurality of protrusion as guide members 29 and the bracket 24 comprises a plurality of recesses, e.g., a bracket recess 37 in the opening 25, as complementary guide arrangement. The encasing 28 comprises a plurality of pin-shaped clips as encasing clip arrangements 33 and the bracket 24 comprises a clip-receiving recess 38 to receive the clips of the encasing clip arrangements 33 in a form locking manner to retain the encasing 28 in the bracket 24. Additionally, the encasing 28 comprises an encasing through hole 34 and the bracket 24 comprises a bracket hole 35 as complementary fastening arrangement to receive the encasing fasteners 31, e.g., screws to fixate the encasing 28 to the bracket 24 as further described with reference to Figs. 7 and 8. The encasing fasteners 31, the encasing clip arrangements 33 and optionally the complementary fastening arrangement of the bracket 24 are adapted to retain the encasing 28 and thus the BMM 22 removably within the battery management housing 23, i.e., the BMM 22 can be reversibly removed from the battery management arrangement 21 by removing the encasing 28 so that the BMM 22 and the encasing 28 can be inserted in the battery management arrangement 21 later again, e.g., after servicing the BMM 22, to be retained battery management arrangement 21.

Fig. 5 illustrates a perspective view of an opened encasing 28 comprising a battery management module 22 according to an embodiment. Figs. 5 and 6 illustrate how the BMM 22 and the encasing 28 are mechanically interconnected.

The encasing 28 comprises two encasing sections 32a, 32b between which the BMM 22 is arranged. The encasing sections 32a, 32b form a bipartite encasing 28. The encasing 28 comprises a connector opening 36 through which the connector 30 of the BMM 22 is accessible from an exterior of the encasing 28.

The encasing 28 comprises a plurality of guide members 29 for guiding the encasing 28 during insertion into the bracket 24 as explained with reference to Figs. 7 and 8. Each of the encasing sections 32a, 32b comprises a part of each of the guide members 29. In the mounted state (as shown in Fig. 6), the parts of the guide members 29 form the guide members 29. The parts of the guide members 29 can be used to open and/or close the encasing 28 with a clip mechanism. I.e., the parts of the guide members 29 comprised by the encasing section 32a are complementary to the parts of the guide members 29 comprised by encasing section 32b so that the encasing sections 32a, 32b can be clipped together to close the encasing 28.

The encasing 28 comprises two encasing through holes 34 for receiving an encasing fastener 31 as explained with reference to Figs. 7 and 8.

The encasing 28 comprises two encasing clip arrangements 33 to fasten the encasing 28 to the bracket 24. I.e., the encasing 28 comprises two projections forming pin-shaped members as encasing clip arrangements 33. Each of the encasing sections 32a, 32b comprises a part of each of the encasing clip arrangements 33. In the mounted state (as shown in Fig. 6), the parts of the encasing clip arrangements 33 form the encasing clip arrangements 33.

The BMM 22 can be arranged within the encasing 28 in a form locking manner, e.g., the BMM 22 can be clamped and/or fixed in the encasing 28. Alternatively or additionally, BMM 22 can be fastened within the encasing 28 by a fastening means, such as one or more screws, bolts, press-fit pins and/or an adhesive.

Fig. 6 illustrates a perspective view of a closed encasing 28 comprising a battery management module 22 according to the embodiment of Fig. 5. The encasing section 32a, 32b are clipped together by the guide members 29 with the complementary parts thereof as described with reference to Fig. 5. The parts of the encasing clip arrangements 33 as described with reference to Fig. 5 form the encasing clip arrangements 33.

Fig. 7 illustrates a perspective view of battery management arrangement 21 as described with reference to Figs. 3 and 4. Fig.7 and Fig. 8 illustrate how the encasing 28 as described with reference to Figs. 5 and 6 and the bracket 24 are mechanically interconnected.

The encasing 28 together with the BMM 22 as shown in Fig. 6 is slidably inserted into the opening 25 of the bracket 24. Therein, the opening 25 is shaped to comprise a bracket recess 37 complementary to the guide members 29. The guide members 29 guide the encasing 28 during insertion into the bracket 24.

The bracket 24 comprises two bracket holes 35 to receive an encasing fastener 31, each. E.g., the encasing fastener 31 can be a screw or a bolt. Each of the bracket holes 35 can be a through hole or a blind hole provided by the bracket 24. Each of the bracket holes 35 can comprise a thread to engage with the encasing fastener 31 (see Fig. 8). Each of the bracket holes 35 and each of the encasing through holes 34 can comprise metal inserts to enable a stable screwing connection.

The bracket 24 comprises hollow spaces 40 to provide a light weight and mechanically stable construction.

Fig. 8 illustrates a perspective view of battery management arrangement 21 in the mounted state according to the embodiment of Fig. 7.

The bracket 24 is retained within the battery management housing 23. The encasing 28 with the BMM 22 is retained in the bracket 24. The encasing 28 is mounted in a fixed and reversible manner to the bracket 24 by the encasing fasteners 31. The encasing 28 is directly screwed to the bracket 24, i.e., the encasing fasteners 31 is arranged to extend through the encasing through hole 34 and through or into the bracket hole 35.

### Reference signs

- 10: battery pack
- 12: battery module
- 13: housing
- 14: housing section
- 20: battery cell
- 21: battery management arrangement
- 22: battery management module, BMM
- 23: battery management housing
- 24: bracket
- 25: opening
- 26: connector casing
- 27: electronics arrangement
- 28: encasing
- 29: guide member
- 30: connector
- 31: encasing fastener
- 32a, 32b: encasing section
- 33: encasing clip arrangement
- 34: encasing through hole
- 35: bracket hole
- 36: connector opening
- 37: bracket recess
- 38: clip-receiving recess
- 40: hollow space

- 300: vehicle
- 301: interconnects
- 310: motor

- L: axis
- X: longitudinal direction

## Claims

1. A battery module (12), comprising:
- a housing (13) comprising a removable housing section (14),
- a plurality of battery cells (20) accommodated within the housing (13), and
- a battery management arrangement (21); wherein
- the battery management arrangement (21) comprises a battery management module, BMM (22), a battery management housing (23) provided within the housing (13) of the battery module (12) and provided between at least two of the plurality of battery cells (20), an electronics arrangement (27), and a bracket (24) arranged within the battery management housing (23) and adapted to retain the BMM (22).

2. The battery module according to claim 1, wherein
- the battery management arrangement (21) further comprises an encasing (28) removably arranged within the bracket (24) and adapted to retain the BMM (22).

3. The battery module according to claim 2, wherein
- the encasing (28) comprises at least two encasing sections (32a, 32b) between which the BMM (22) is arranged and/or the encasing (28) comprises at least one encasing fastener (31) and/or encasing clip arrangement (33) to fasten the encasing (28) to the bracket (24).

4. The battery module according to any one of the preceding claims, wherein
- the electronics arrangement (27) is mounted to the bracket (24).

5. The battery module according to any one of the preceding claims, wherein
- the battery management housing (23) is made of metal and the bracket (24) is made of a polymer.

6. The battery module according to any one of the preceding claims, wherein
- the battery management housing (23) is made of sheet metal with a thickness of between 1.8 mm and 2.2 mm.

7. The battery module according to any one of the preceding claims, wherein
- the battery management housing (23) defines an axis (L) along which the bracket (24) is slidably insertable in the battery management housing (23).

8. The battery module according to any one of the preceding claims, wherein
- the bracket (24) defines an axis (L) along which the BMM (22) is slidably insertable in the bracket (24) to be retained.

9. The battery module according to any one of the preceding claims 7 or 8, wherein
- the axis (L) is perpendicular to a longitudinal direction (X) of the removable housing section (14).

10. The battery module according to any one of the preceding claims, wherein
- the bracket (24) comprises an opening (25) to retain the BMM (22).

11. The battery module according to any one of the preceding claims, wherein
- the bracket (24) comprises at least one connector casing (26); and
- the BMM (22) comprises a connector (30) provided within the connector casing (26) to interconnect the BMM (22) and the electronics arrangement (27).

12. A battery pack (10), comprising a plurality of battery modules (12) as claimed in any one of the preceding claims.

13. An electric vehicle comprising at least one battery module (12) according to any one of the preceding claims 1 to 11 and/or at least one battery pack (10) according to claim 12.

14. A battery management arrangement (21) comprising
- a battery management module, BMM, (22), a battery management housing (23), an electronics arrangement (27), and a bracket (24) arranged within the battery management housing (23) and adapted to retain the BMM (22).

15. A method for assembling a battery module according to any one of the preceding claims 1 to 11, wherein the method comprises the steps of:
a) providing a housing (13) comprising a removable housing section (14); a plurality of battery cells (20) accommodated within the housing (13); and a battery management arrangement (21) comprising a battery management module, BMM (22), a battery management housing (23) and an electronics arrangement (27), and a bracket (24);
b) arranging the battery management housing (23) within the housing (13) of the battery module (12) between at least two of the plurality of battery cells (20); and
c) arranging the BMM (22) in the bracket (24) arranged within the battery management housing (23) and adapted to retain the BMM (22).

## Amended claims

### Amended claims in accordance with Rule 137(2) EPC.

1. A battery management arrangement (21) comprising
- a battery management module, BMM, (22), a battery management housing (23), an electronics arrangement (27), and a bracket (24) arranged within the battery management housing (23) and adapted to retain the BMM (22).

2. A battery module (12), comprising:
- a housing (13) comprising a removable housing section (14),
- a plurality of battery cells (20) accommodated within the housing (13), and
- the battery management arrangement (21) according to claim 1; wherein
- the battery management housing (23) is provided within the housing (13) of the battery module (12) and between at least two of the plurality of battery cells (20).

3. The battery module according to claim 2, wherein
- the battery management arrangement (21) further comprises an encasing (28) removably arranged within the bracket (24) and adapted to retain the BMM (22).

4. The battery module according to claim 3, wherein
- the encasing (28) comprises at least two encasing sections (32a, 32b) between which the BMM (22) is arranged and/or the encasing (28) comprises at least one encasing fastener (31) and/or encasing clip arrangement (33) to fasten the encasing (28) to the bracket (24).

5. The battery module according to any of claim 2 to 4, wherein
- the electronics arrangement (27) is mounted to the bracket (24).

6. The battery module according to any of claims 2 to 5, wherein
- the battery management housing (23) is made of metal and the bracket (24) is made of a polymer.

7. The battery module according to any of claims 2 to 6, wherein
- the battery management housing (23) is made of sheet metal with a thickness of between 1.8 mm and 2.2 mm.

8. The battery module according to any of claims 2 to 7, wherein
- the battery management housing (23) defines an axis (L) along which the bracket (24) is slidably insertable in the battery management housing (23).

9. The battery module according to any of claims 2 to 8, wherein
- the bracket (24) defines an axis (L) along which the BMM (22) is slidably insertable in the bracket (24) to be retained.

10. The battery module according to any of claims 7 or 8, wherein
- the axis (L) is perpendicular to a longitudinal direction (X) of the removable housing section (14).

11. The battery module according to any of claims 2 to 10, wherein
- the bracket (24) comprises an opening (25) to retain the BMM (22).

12. The battery module according to any of claims 2 to 11, wherein
- the bracket (24) comprises at least one connector casing (26); and
- the BMM (22) comprises a connector (30) provided within the connector casing (26) to interconnect the BMM (22) and the electronics arrangement (27).

13. A battery pack (10), comprising a plurality of battery modules (12) as claimed in any of claims 2 to 12.

14. An electric vehicle comprising at least one battery module (12) according to any of claims 2 to 12 and/or at least one battery pack (10) according to claim 13.

15. A method for assembling a battery module according to any of claims 2 to 12, wherein the method comprises the steps of:
a) providing a housing (13) comprising a removable housing section (14); a plurality of battery cells (20) accommodated within the housing (13); and a battery management arrangement (21) comprising a battery management module, BMM (22), a battery management housing (23) and an electronics arrangement (27), and a bracket (24);
b) arranging the battery management housing (23) within the housing (13) of the battery module (12) between at least two of the plurality of battery cells (20); and
c) arranging the BMM (22) in the bracket (24) arranged within the battery management housing (23) and adapted to retain the BMM (22).
